# EUROPÄISCHE PATENTSCHRIFT

(11) **EP 2 643 920 B1**
(45) Veröffentlichungstag und Bekanntmachung des Hinweises auf die Patenterteilung: **03.10.2018**
(21) Anmeldenummer: 11776739.2
(22) Anmeldetag: 25.10.2011
(51) Int. Cl.: H02K 11/026

(54) **SCHIRMUNGSANORDNUNG FÜR EINEN BÜRSTENKOMMUTIERTEN ELEKTROMOTOR SOWIE STELLGEBER MIT EINEM ELEKTROMOTOR**
SHIELDING ARRANGEMENT FOR A BRUSH-COMMUTATED ELECTRIC MOTOR, AND POSITIONING ELEMENT WITH AN ELECTRIC MOTOR
DISPOSITIF DE PROTECTION POUR MOTEUR ÉLECTRIQUE COMMUTÉ PAR UN BALAI ET CAPTEUR DE POSITION DOTÉ D'UN MOTEUR ÉLECTRIQUE

(30) Priorität: 26.11.2010 DE 102010062034
(43) Veröffentlichungstag der Anmeldung: 02.10.2013
(73) Patentinhaber: Robert Bosch GmbH, 70442 Stuttgart (DE)
(72) Erfinder: SEIERT, Paul, 76437 Rastatt (DE); SURKAMP, Gundolf, E-08720 Vilafranca Del Penedes (Barcelona) (ES); HUESGES, Mario, 77830 Buehlertal (DE); FRIDERICHS, Guenther, 77836 Rheinmuenster (DE); LAUK, Detlef, 77871 Renchen (DE); STERNS, Orlando, 76228 Karlsruhe (DE); GEUBEL, Paul, 76534 Baden-Baden (DE)
(86) Internationale Anmeldenummer: PCT/EP2011/068623
(87) Internationale Veröffentlichungsnummer: WO 2012/069268

(56) Entgegenhaltungen:
- WO-A1-2009/071371
- DE-A1- 19 804 369
- DE-A1-102007 007 248

## Beschreibung

### Technisches Gebiet

Die vorliegende Erfindung betrifft bürstenkommutierte Elektromotoren, insbesondere zum Einsatz in einem Kraftfahrzeug. Weiterhin betrifft die Erfindung die EMV-Schirmung eines solchen Elektromotors.

### Stand der Technik

Die DE 198 04 369 A1 umfasst gattungsgemäße Merkmale.

In Kraftfahrzeugen werden Elektromotoren als Stellgebermotoren in einer Vielzahl verschiedener Anwendungen eingesetzt. Derartige Elektromotoren werden, da die Versorgungsspannung in einem Kraftfahrzeug eine Gleichspannung ist, in der Regel als bürstenkommutierte Gleichspannungsmotoren ausgebildet.

Der zunehmende Einsatz von Elektronikbaugruppen im Kraftfahrzeug sowie die Verwendung von digitalen Funkdiensten machen das Fahrzeug insgesamt empfindlicher gegenüber elektromagnetischer Strahlung. Bei bürstenkommutierten Elektromotoren kommt es beim Kommutierungsvorgang, d.h. beim Wechsel der Kontaktierung eines Lamellenfelds durch eine Bürste zu der Kontaktierung eines nächsten Lamellenfelds des Kommutators, zu abrupten Spannungsschwankungen bzw. unter Umständen zu Funkenbildungen, die eine erhöhte elektromagnetische Abstrahlung bewirken.

Bei Elektromotoren in einem Kraftfahrzeug sind Stellgeber häufig als Baugruppe mit einem Getriebe ausgebildet. Dabei ist ein Motorgehäuse direkt an einem Getriebegehäuse montiert, so dass die Abtriebswelle des Motors direkt in das Getriebegehäuse hineinragt und in vorgegebener Weise mit einer Getriebeausgangswelle gekoppelt ist. Während das Motorgehäuse in der Regel als Metallgehäuse ausgeführt ist, wird das Getriebegehäuse aus Kunststoff hergestellt. Die Verbindungsstelle zwischen dem Metallgehäuse des Motors und dem Kunststoffgehäuse des Getriebes ist in der Regel so, dass keine Schirmung der von dem Kommutator erzeugten EMV-Strahlung an der dem Getriebegehäuse zugewandten Stirnseite des Motorgehäuses erfolgt.
Das Vorsehen einer geeigneten Schirmung ist jedoch schwierig, da sie die Montage des Elektromotors bzw. des Stellgebers nicht erheblich beeinträchtigen darf. Insbesondere muss eine solche Schirmung bei einem Zusammenbau des Motors aus Gründen einer effizienten Montage in axialer Richtung realisiert werden können.
Es ist Aufgabe der vorliegenden Erfindung, eine Schirmungsanordnung, einen Elektromotor und einen Stellgeber vorzusehen, um EMV-Schirmung bereitzustellen und eine einfache Montage zu ermöglichen

### Offenbarung der Erfindung

Diese Aufgabe wird durch die Schirmungsanordnung gemäß Anspruch 1 sowie durch einen Elektromotor und einen Stellgeber gemäß den nebengeordneten Ansprüchen 6 und 15 gelöst.

Weitere vorteilhafte Ausgestaltungen sind in den abhängigen Ansprüchen angegeben.
Gemäß einem ersten Aspekt ist eine Schirmungsanordnung zur Schirmung eines Kommutators eines Elektromotors für einen Stellgeber vorgesehen. Die Schirmungsanordnung umfasst:
- einen Schirmungshut aus einem elektrisch leitfähigen Material, der ein zylindrisches Innenteil und einen Halteabschnitt mit einem bezüglich des Innenteils größerem Durchmesser aufweist;
- mindestens ein elektrisch leitfähiges, flächiges Abschlusselement zum Aufsetzen auf eine Stirnseite des zylindrisches Innenteils;
wobei das Abschlusselement nur einen Teil der Stirnfläche des Innenteils verschließt.

Gemäß einem weiteren Aspekt ist ein Elektromotor für einen elektromotorischen Stellgeber vorgesehen. Der Elektromotor umfasst:
- die obige Schirmungsanordnung;
- ein hohlzylindrisches Motorgehäuse;
- eine in das zylindrische Motorgehäuse eingesetzte Ankereinheit, die einen oder mehrere umwickelte Anker und einen Kommutator auf einer Abtriebswelle trägt.

Die obige Schirmungsanordnung stellt ein einfach in axialer Richtung montierbares Bauelement dar, das eine Möglichkeit darstellt, eine zuverlässige Schirmung des Kommutators eines Elektromotors für einen Stellgeber zur Verfügung zu stellen und gleichzeitig einfach zu montieren ist. Die Schirmung erfolgt zum einen über den Halteabschnitt, der ins Innere eines Motorgehäuses einsetzbar ist, und zum anderen über das Abschlusselement, das auf eine Stirnseite des Innenteils, das im montierten Zustand aus dem Motorgehäuse herausgeführt ist, aufgesetzt wird und bestenfalls nur die Abtriebswelle des Elektromotors durchlässt.

Weiterhin kann der Schirmungshut eine Halterung aufweisen, um das Abschlusselement an dem Schirmungshut zu halten.

Gemäß einer Ausführungsform kann der Halteabschnitt an einem Ende des Innenteils angeordnet und als umlaufender Kragen ausgebildet sein.

Das Abschlusselement kann an einer Kante eine Ausnehmung, insbesondere mit einer halbkreisförmigen Kontur, aufweisen, durch die ein Innenraum des Innenteils zugänglich ist.

Weiterhin können zwei Abschlusselemente vorgesehen sein, die von verschiedenen Richtungen auf den Schirmungshut aufgesetzt werden, wobei die zwei Abschlusselemente jeweils eine Ausnehmung aufweisen, die so an deren Kanten angeordnet sind, dass diese im auf den Schirmungshut aufgesetzten Zustand eine kreisförmige Durchgangsöffnung auf der Stirnseite des Innenteils bilden.

Der Elektromotor kann einen zylindrischen Bürstenhalter vorsehen, der so in das Motorgehäuse eingesetzt ist, dass er den Kommutator umgibt, und der mit der Innenwand des Motorgehäuses eine Kante bildet, auf der der Schirmungshut der Schirmungsanordnung aufgesetzt ist.

Weiterhin kann das Innenteil so aus dem Motorgehäuse ragen, dass das Abschlusselement durch Aufschieben in einer Richtung senkrecht zur Achsrichtung aufsetzbar ist.

Das Innenteil kann einen Innendurchmesser aufweisen, um es bei der Montage des Elektromotors über ein auf der Abtriebswelle angeordnetes Kugellager zu schieben.

Es kann vorgesehen sein, dass das Abschlusselement als Verschlussblech ausgebildet ist, das zwischen dem Schirmungshut und dem Kugellager angeordnet ist.

Alternativ kann das Abschlusselement als Klemmblech ausgebildet sein, das in einer Nut an einer Umfangsfläche des Kugellagers angeordnet ist.

Das Abschlusselement kann ferner eine Ausnehmung aufweisen, die zumindest eine halbkreisförmige Kontur aufweist, um die durch das Innenteil verlaufende Abtriebswelle zumindest teilweise, insbesondere halbkreisförmig, zu umgeben.

Gemäß einer Ausführungsform können zwei Abschlusselemente mit jeweils einer Ausnehmung vorgesehen sein, die so auf die Stirnseite des Innenteils aufsetzbar sind, dass sie sich überlappen.

Alternativ können zwei Abschlusselemente mit jeweils einer komplementären Kontur vorgesehen sein, die beim Aufsetzen auf die Stirnseite des Innenteils ineinander greifen und als Ausnehmung eine Durchgangsöffnung für die Abtriebswelle bilden.

Gemäß einem weiteren Aspekt ist ein Stellgeber, insbesondere zum Einsatz in einem Kraftfahrzeug, vorgesehen. Der Stellgeber umfasst:
- ein Getriebegehäuse mit einem Getriebe;
- den obigen Elektromotor, der auf das Getriebegehäuse aufgesetzt ist, so dass die Abtriebswelle zum Koppeln mit einem Getriebe in das Getriebegehäuse hineinragt.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine perspektivische Schnittansicht eines elektromotorischen Stellgebers;
- Figur 2: eine perspektivische Darstellung einer Schirmungsanordnung zum Einsatz in einem Motorgehäuse des Elektromotors;
- Figuren 3a und 3b: Montagezustände zur Veranschaulichung des Verfahrens zur Montage des Elektromotors;
- Figuren 4a bis 4b: Darstellungen einer ersten Schirmungsanordnung zum EMV-sicheren Verschließen des Motorgehäuses;
- Figuren 5a bis 5b: Darstellungen einer weiteren Schirmungsanordnung zum EMV-sicheren Verschließen des Motorgehäuses; und
- Figur 6: eine Darstellung einer weiteren Schirmungsanordnung zum EMV-sicheren Verschließen des Motorgehäuses.

### Beschreibung von Ausführungsformen

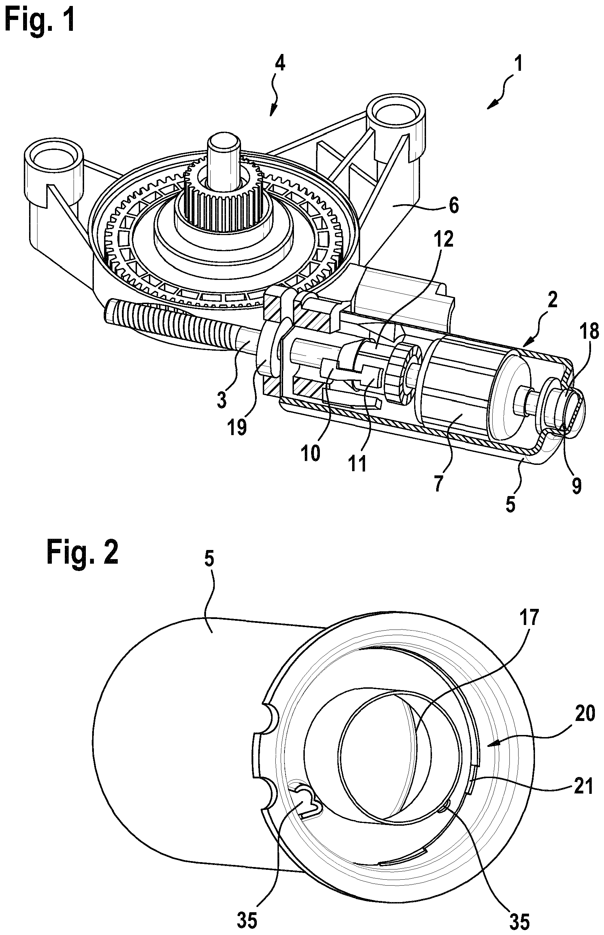

In Figur 1 ist ein elektromotorischer Stellgeber 1 zum Einsatz in einem Kraftfahrzeug dargestellt. Derartige Stellgeber 1 werden in Kraftfahrzeugen für standardisierte Fensterhebersysteme, Heckwischersysteme, Schiebedachsysteme und/oder Sitzantriebe eingesetzt.

Der Stellgeber 1 umfasst einen Elektromotor 2, der über eine Abtriebswelle 3 mit einer Getriebeeinheit 4 gekoppelt ist. Der Elektromotor 2 befindet sich in einem zylindrischen, insbesondere kreiszylindrischen, Motorgehäuse 5, das vorzugsweise als Metallgehäuse ausgebildet ist. Die Getriebeeinheit 4 ist in einem Getriebegehäuse 6 eingebettet, das vorzugsweise in Form eines Kunststoffgehäuses ausgebildet ist.

In dem Motorgehäuse befindet sich ein Rotor, der als Ankereinheit 7 ausgebildet ist, die auf einer Abtriebswelle 3 umwickelte Anker und einen Kommutator 8 zum Versorgen der Ankerwicklungen trägt. Der Kommutator 8 weist Kommutatorlamellen 12 auf, die von Bürsten 11 kontaktiert werden, um die Ankerwicklungen mit elektrischer Energie zu versorgen. Die Bürsten sind auf einem Bürstenhalter 10 montiert.

Die Abtriebswelle 3 ist zwischen zwei Kugellagern gelagert. Ein erstes Kugellager 18 liegt bezüglich der umwickelten Anker dem Kommutator 8 gegenüber. Das mit dem ersten Kugellager 18 versehene Ende der Abtriebswelle 3 ist in einer Ausnehmung 9 des Motorgehäuses 5 aufgenommen. Ein zweites Kugellager 19 liegt dem ersten Kugellager 18 bezüglich des Elektromotors gegenüber und ist in dem Getriebegehäuse 6 aufgenommen.

Zur Montage des Elektromotors 2 wird zunächst das Motorgehäuse 5 mit der Ankereinheit 7 bestückt. Dazu wird die Ankereinheit 7 in axialer Richtung in das Motorgehäuse 5 eingesetzt, so dass das mit dem ersten Kugellager 18 versehene Ende der Abtriebswelle 3 in der Ausnehmung 9 des Motorgehäuses 5 aufgenommen wird. Nachfolgend wird der Bürstenhalter 10 so in das Motorgehäuse 5 eingesetzt, dass die Bürsten 11 die Kommutatorlamellen 12 kontaktieren. Das offene Ende des Motorgehäuses 5 wird an dem Getriebegehäuse 6 aufgesetzt, das das zweite Kugellager 19 zur Lagerung der Abtriebswelle 3 umfasst.

Bei dieser Aufbauweise ist das zum Getriebegehäuse 6 hin offene Ende des Motorgehäuses 5 nicht mit einer metallischen Schirmung versehen, so dass elektromagnetische Strahlung, die von dem Kommutator 8 im Betrieb des Elektromotors 2 erzeugt wird, austreten kann.

Um den Bürstenhalter 10 im Motorgehäuse 5 abzuschirmen, ist eine Schirmungsanordnung 20 vorgesehen, die einen Schirmungshut 21 aufweist. Der Schirmungshut 21 wird, wie in Figur 2 dargestellt, in das Innere des Motorgehäuses 5 eingeschoben und an der Innenwand des Motorgehäuses 5 verklemmt.

Der Schirmungshut 21 weist dazu an seiner breitesten Stelle einen Querschnitt auf, der dem Querschnitt der Innenausnehmung des Motorgehäuses 5 entspricht, und wird an dieser befestigt, beispielsweise durch Klemmen, Kleben, Löten oder Schweißen. Im dargestellten Ausführungsbeispiel ist der Schirmungshut 21 kreiszylindrisch ausgebildet und weist eine Innenausnehmung auf, um bei der Montage des Elektromotors 2 den Schirmungshut 21 über die Abtriebswelle 3 und das auf der Abtriebswelle 3 angeordnete zweite Kugellager 19 schieben zu können.

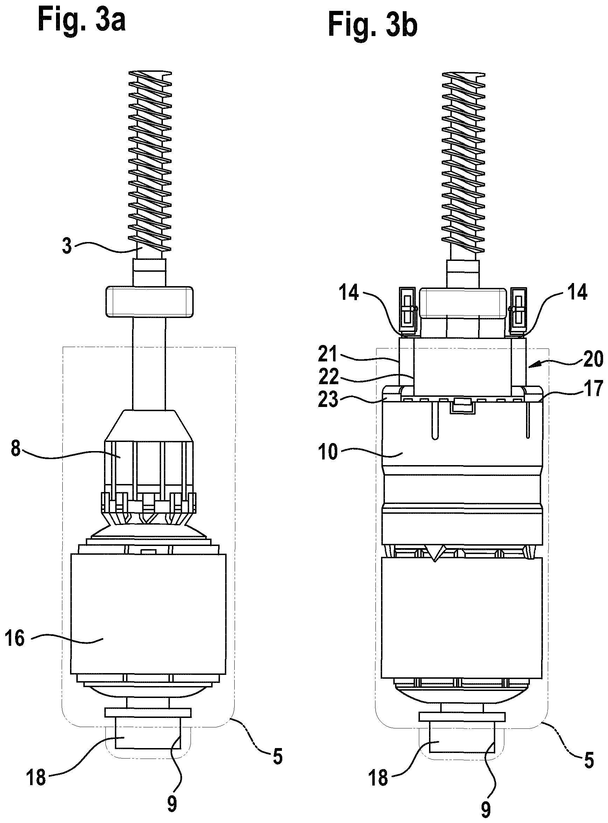

In Figur 3a ist ein Zwischenzustand bei der Montage des Elektromotors 2 dargestellt, bei dem die Ankereinheit 7 mit den Ankerwicklungen und dem Kommutator 8 so in das Motorgehäuse 5 eingesetzt ist, dass das erste an der Abtriebswelle 3 angeordnete Kugellager 18 in die Ausnehmung 9 des Motorgehäuses 5 eingesetzt ist. Im Inneren des Motorgehäuses 5 befinden sich Statormagneten 16, die, wenn die Ankereinheit vollständig in das Motorgehäuse 5 eingeschoben ist, die bewickelten Anker umgeben, wobei die durch die Statormagneten 16 gebildete Innenausnehmung ausreichend groß ist, so dass sich die umwickelten Anker frei um die Abtriebswelle 3 drehen können. An einem dem ersten Kugellager 18 gegenüber liegenden Ende der Anker ist der Kommutator 8 angeordnet.

In Figur 3b ist eine Ansicht des Elektromotors 2 nach vollständiger Montage dargestellt. Um den Kommutator 8 wird, ausgehend von dem Verfahrenszustand der Figur 3a, der Bürstenhalter 10 eingesetzt, der Bürsten 11 trägt, die die Kommutatorlamellen 12 des Kommutators 8 kontaktieren. Der Bürstenhalter 13 weist eine zylindrische Ummantelung auf, die aus Kunststoff oder Metall ausgebildet sein kann, um eine Halterung für die Bürsten zum Kontaktieren des Kommutators 8 zur Verfügung zu stellen.

Die Bürsten 11 in dem Bürstenhalter 10 sind über elektrische Kontaktierungen 14 kontaktierbar. Die Kontaktierungen 14 verlaufen in axialer Richtung aus dem Motorgehäuse 5 hinaus und ermöglichen eine elektrische Kontaktierung der Bürsten 11. Die Schirmungsanordnung 20 wird in axialer Richtung auf dem Bürstenhalter 10 aufgesetzt. Dazu wird der Schirmungshut 21 so in das Motorgehäuse 5 eingesetzt, dass er auf der durch den Bürstenhalter 10 und das umgebende Motorgehäuse 5 gebildeten Kante 17 aufliegt.

Der Schirmungshut 21 weist ein zylindrisches Innenteil 22 auf, das an einem Ende einen Halteabschnitt 23 aufweist, der scheibenförmig verbreitert ist. Der Halteabschnitt 23 weist eine Kontur auf, die dem Innenquerschnitt des Motorgehäuses 5 so entspricht, dass der Schirmungshut 21 in das Motorgehäuse 5 eingeschoben und an die Kante 17 angelegt werden kann. Im montierten Zustand der Ankereinheit 7 und des Bürstenhalters 10 und der Schirmungsanordnung 20 ragt das dem Halteabschnitt 23 gegenüber liegende Ende des Innenteils 22 des Schirmungshuts 21 aus dem Metallgehäuse hervor.

Der Halteabschnitt 23 weist Durchgangslöcher 35 auf, durch die im montierten Zustand die Kontaktierungen 14 geführt werden.

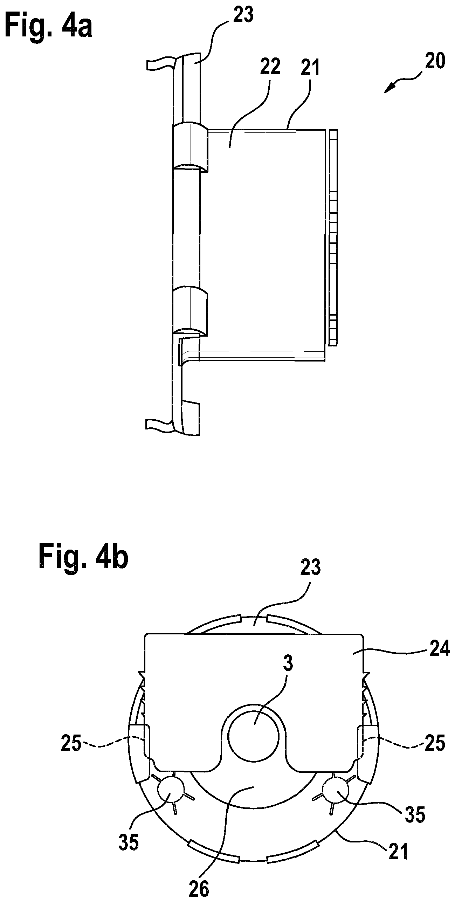

In Figur 4a ist eine Seitenansicht der Schirmungsanordnung 20 in einer möglichen Ausgestaltung dargestellt. Die Innenausnehmung des Innenteils 22 des Schirmungshuts 21 muss zur axialen Montage so groß sein, dass das zweite Kugellager 19 hindurch geführt werden kann. Da der Durchmesser der Abtriebswelle 3 in der Regel deutlich geringer ist als der Durchmesser des zweiten Kugellagers 19, kann der Schirmungshut 21 die durch den Kommutator 8 entstehende EMV-Strahlung nicht vollständig abschirmen, da zwischen der Abtriebswelle 3 und dem Innenteil 22 des Schirmungshuts 21 ein Zwischenraum besteht, durch den EMV-Strahlung nach außerhalb des Motorgehäuses 5 gelangen kann.

Weiterhin ist der Halteabschnitt 23 im gezeigten Beispiel an einem Ende des Innenteils 22 ausgebildet. Es kann jedoch auch vorgesehen sein, dass der Halteabschnitt 23 sich innerhalb des Verlaufs des Innenteils 22 und nicht an einem von dessen Enden befindet.

In Figur 4b ist eine Draufsicht auf die Schirmungsanordnung 20 dargestellt. Um eine verbesserte Schirmung zu erreichen, umfasst die Schirmungsanordnung 20 weiterhin ein Schirmungsverschlussblech 24, das auf den Schirmungshut 21 aufgesetzt werden kann, z.B. durch seitliches Aufschieben auf den Schirmungshut 21. Das Schirmungsverschlussblech 24 (Abschlusselement) bedeckt im aufgeschobenen Zustand das dem Halteabschnitt 23 gegenüber liegende Ende des Schirmungshuts 21.

Das Schirmungsverschlussblech 24 ist, ebenso wie der Schirmungshut 21, aus einem metallischen oder leitfähigen Material ausgebildet, so dass es für eine Schirmung von EMV-Strahlung geeignet ist. Das Schirmungsverschlussblech 24 steht dabei in elektrischer Verbindung zum Schirmungshut 21 und ist so mit dem Motorgehäuse 5 verbunden, dass es über die Erdung bzw. über das an dem Motorgehäuse 5 anliegende Massepotential auf ein festgelegtes Spannungspotential gebracht ist.

Das Schirmungsverschlussblech 24 kann im gezeigten Ausführungsbeispiel in eine Halterung 25 an einem dem Halteabschnitt 23 gegenüber liegenden Ende des Innenteils 22 eingeschoben werden. Die Halterung 25 ist zweiteilig als Führung mit zwei einander gegenüber liegenden Führungselementen ausgebildet. Die Führungselemente weisen einen Abstand zueinander auf, der der Breite des Schirmungsverschlussblechs 24 entspricht. Das Schirmungsverschlussblech 24 weist an seinen in die Führungselemente einzusetzenden Kanten Rastnasen auf, um nach dem Einsetzen des Schirmungsverschlussblechs 24 dieses sicher an dem Schirmungshut 21 zu halten.

Weiterhin weist das Schirmungsverschlussblech 24 eine mittige Ausnehmung 26 auf, die an einer Kante des Schirmungsverschlussblechs 24 vorgesehen ist und die eine Breite aufweist, die mindestens der Breite der Abtriebswelle 3 entspricht und die geringer ist als die Innenausnehmung des Schirmungshuts 21. Im eingeschobenen Zustand des Schirmungsverschlussblechs 24 ist die Abtriebswelle 3 vollständig in der Ausnehmung 26 aufgenommen.

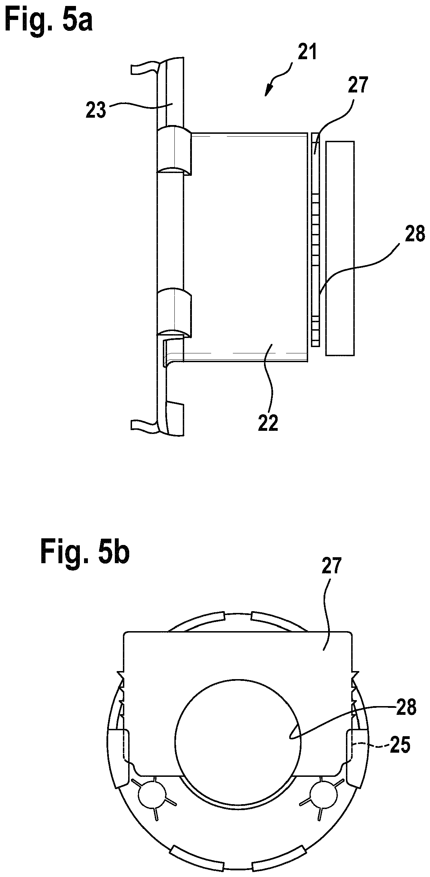

Gemäß weiteren Ausführungsformen, die in Figur 5a und 5b dargestellt sind, kann anstelle des Schirmungsverschlussblechs 24 ein Klemmblech 27 als Abschlusselement vorgesehen sein, das wie das Schirmungsverschlussblech 24 in der Halterung 25 fest mit dem Schirmungshut 21 verbunden ist. Das zweite Kugellager 19 ist dann im montierten Zustand nahe dem dem Halteabschnitt 23 gegenüber liegenden Ende des Innenteils 22 angeordnet und weist vorzugsweise eine Klemmnut (nicht gezeigt) auf, in die das Klemmblech 27 mit einer entsprechenden Ausnehmung 28 aufgenommen wird. Durch die Fixierung des Klemmblechs 27 an dem Schirmungshut 21 und an dem zweiten Kugellager 19 kann die Abtriebswelle 3 über das zweite Kugellager 19 fest in dem Motorgehäuse 5 gehalten werden, da die Ankereinheit zwischen dem in der Ausnehmung 9 des Motorgehäuses 5 gehaltenen ersten Kugellager 18 und dem durch den Schirmungshut 21 gehaltenen zweiten Kugellager 19 sowohl gegen Zug als auch gegen Druck in axialen Richtungen fixiert ist. Die Schirmung erfolgt in diesem Fall durch das nahe dem dem Halteabschnitt 23 gegenüber liegende Ende angeordnete zweite Kugellager 19, durch das das Innenteil 22 verschlossen wird. Auf diese Weise kann keine EMV-Strahlung von dem Kommutator 8 nach außerhalb des Motorgehäuses 5 gelangen.

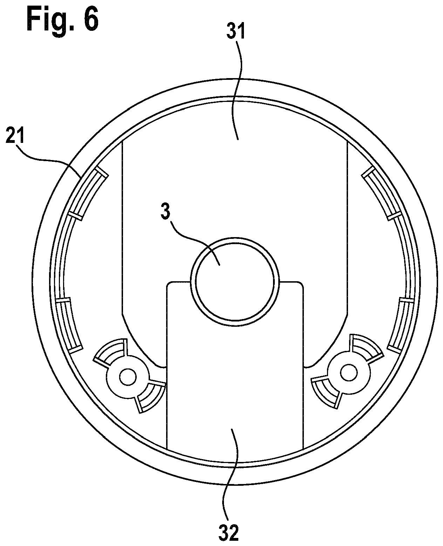

Wie in Figur 6 dargestellt ist, kann die Schirmungsanordnung 20 auch zwei Schirmungsbleche 31, 32 als Abschlusselemente aufweisen, die jeweils eine Ausnehmung aufweisen und im Wesentlichen aus entgegengesetzten Richtungen in Richtung der Abtriebswelle 3 vor das aus dem Motorgehäuse 5 ragende Ende des Schirmungshuts 21 geschoben werden. Die Ausnehmungen der beiden Schirmungsbleche 31, 32 überlappen sich und umgeben die Abtriebswelle 3 so, dass durch die Überlappung der beiden Schirmungsbleche 31, 32 die Öffnung des Innenteils 22 des Schirmungshuts 21 vollständig abgedeckt wird.

Die Schirmungsbleche 31, 32 können überlappend vorgesehen sein oder zueinander komplementär ausgebildet sein, so dass bei der Montage beider Schirmungsbleche 31, 32 diese so ineinander geschoben werden, dass lediglich eine Innenausnehmung in Form des Querschnitts der Abtriebswelle 3 verbleibt. Dadurch ist es möglich, die Schirmungsanordnung 20 so auszubilden, dass diese den Innenraum des Elektromotors 2 vollständig abschirmt.

## Patentansprüche

1. Schirmungsanordnung (20) zur Schirmung eines Kommutators eines Elektromotors für einen Stellgeber (1); umfassend:
- einen Schirmungshut (21) aus einem elektrisch leitfähigen Material, der ein zylindrisches Innenteil (22) und einen Halteabschnitt (23) mit einem bezüglich des Innenteils (22) größerem Durchmesser aufweist; **gekennzeichnet durch**
- mindestens ein elektrisch leitfähiges, flächiges Abschlusselement (24, 27, 31, 32) zum Aufsetzen auf eine Stirnseite des zylindrisches Innenteils (22),
wobei das Abschlusselement (24, 27, 31, 32) nur einen Teil der Stirnfläche des Innenteils (22) verschließt.

2. Schirmungsanordnung (20) nach Anspruch 1, wobei der Schirmungshut 821) eine Halterung (25) aufweist, um das Abschlusselement (24, 27, 31, 32) an dem Schirmungshut zu halten.

3. Schirmungsanordnung (20) nach Anspruch 1 oder 2, wobei der Halteabschnitt (23) an einem Ende des Innenteils (22) angeordnet und als umlaufender Kragen ausgebildet ist.

4. Schirmungsanordnung (20) nach einem der vorangehenden Ansprüche, wobei das Abschlusselement (24, 27, 31, 32) eine Ausnehmung (26), insbesondere mit einer halbkreisförmigen Kontur, an einer Kante aufweist, durch die ein Innenraum des Innenteils (22) zugänglich ist.

5. Schirmungsanordnung (20) nach einem der vorangehenden Ansprüche, wobei zwei Abschlusselemente (31, 32) vorgesehen sind, die von verschiedenen Richtungen auf den Schirmungshut (21) aufgesetzt werden, wobei die zwei Abschlusselemente (31, 32) jeweils eine Ausnehmung aufweisen, die so an deren Kanten angeordnet sind, dass diese im auf den Schirmungshut (21) aufgesetzten Zustand eine kreisförmige Durchgangsöffnung auf der Stirnseite des Innenteils bilden.

6. Elektromotor (2) für einen elektromotorischen Stellgeber (1), umfassend:
- eine Schirmungsanordnung (20) nach einem der vorangehenden Ansprüche;
- ein hohlzylindrisches Motorgehäuse (5);
- eine in das zylindrische Motorgehäuse (5) eingesetzte Ankereinheit (7), die einen oder mehrere umwickelte Anker und einen Kommutator (8) auf einer Abtriebswelle (3) trägt.

7. Elektromotor nach Anspruch 6, wobei ein zylindrischer Bürstenhalter (10) vorgesehen ist, der so in das Motorgehäuse (5) eingesetzt ist, dass er den Kommutator (8) umgibt, und der mit der Innenwand des Motorgehäuses (5) eine Kante bildet, auf der der Schirmungshut (21) der Schirmungsanordnung (20) aufgesetzt ist.

8. Elektromotor nach einem der Ansprüche 6 und 7, wobei das Innenteil so aus dem Motorgehäuse (5) ragt, dass das Abschlusselement (24, 27, 31, 32) durch Aufschieben in einer Richtung senkrecht zur Achsrichtung aufsetzbar ist.

9. Elektromotor nach einem der Ansprüche 6 bis 8, wobei das Innenteil (22) einen Innendurchmesser aufweist, um es bei der Montage des Elektromotors (2) über ein auf der Abtriebswelle (3) angeordnetes Kugellager zu schieben.

10. Elektromotor nach Anspruch 9, wobei das Abschlusselement (24, 27, 31, 32) als Verschlussblech ausgebildet ist, das zwischen dem Schirmungshut (21) und dem Kugellager angeordnet ist.

11. Elektromotor nach Anspruch 9, wobei das Abschlusselement (27) als Klemmblech (27) ausgebildet ist, das in einer Nut an einer Umfangsfläche des Kugellagers angeordnet ist.

12. Elektromotor nach einem der Ansprüche 6 bis 11, wobei das Abschlusselement (27) eine Ausnehmung aufweist, die zumindest eine halbkreisförmige Kontur aufweist, um die durch das Innenteil verlaufende Abtriebswelle (3) zumindest teilweise, insbesondere halbkreisförmig, zu umgeben.

13. Elektromotor nach einem der Ansprüche 6 bis 11, wobei zwei Abschlusselemente (31, 32) mit jeweils einer Ausnehmung vorgesehen sind, die so auf die Stirnseite des Innenteils aufsetzbar sind, dass sie sich überlappen, wobei eine Durchgangsöffnung für die durch das Innenteil (22) verlaufende Abtriebswelle (3) gebildet wird.

14. Elektromotor nach einem der Ansprüche 6 bis 11, wobei zwei Abschlusselemente (31, 32) mit jeweils einer komplementären Kontur vorgesehen sind, die beim Aufsetzen auf die Stirnseite des Innenteils ineinander greifen und als Ausnehmung eine Durchgangsöffnung für die Abtriebswelle (3) bilden.

15. Stellgeber (1), insbesondere zum Einsatz in einem Kraftfahrzeug, umfassend:
- ein Getriebegehäuse mit einem Getriebe;
- der Elektromotor (2) nach einem der Ansprüche 6 bis 14, der auf das Getriebegehäuse (4) aufgesetzt ist, so dass die Abtriebswelle (3) in das Getriebegehäuse (4) zum Koppeln mit einem Getriebe hineinragt.

## Claims

1. Shielding arrangement (20) for shielding a commutator of an electric motor for an actuator (1); comprising:
- a shielding cap (21) which is composed of an electrically conductive material and has a cylindrical inner part (22) and a holding section (23) with a diameter which is larger than the inner part (22);
**characterized by**
- at least one electrically conductive, flat termination element (24, 27, 31, 32) for being fitted on an end side of the cylindrical inner part (22),
wherein the termination element (24, 27, 31, 32) closes only a portion of the end face of the inner part (22).

2. Shielding arrangement (20) according to Claim 1, wherein the shielding cap 821) has a holder (25) in order to hold the termination element (24, 27, 31, 32) on the shielding cap.

3. Shielding arrangement (20) according to Claim 1 or 2, wherein the holding section (23) is arranged at an end of the inner part (22) and is in the form of a circumferential collar.

4. Shielding arrangement (20) according to one of the preceding claims, wherein the termination element (24, 27, 31, 32) has a recess (26), in particular with a semicircular contour, at an edge, an interior of the inner part (22) being accessible through the said recess.

5. Shielding arrangement (20) according to one of the preceding claims, wherein two termination elements (31, 32) are provided, which two termination elements are fitted onto the shielding cap (21) from different directions, wherein the two termination elements (31, 32) each have a recess, which recesses are arranged at the edges of the said termination elements such that the said recesses, in the state in which the termination elements are fitted on the shielding cap (21), form a circular passage opening on the end side of the inner part.

6. Electric motor (2) for an electromotive actuator (1), comprising:
- a shielding arrangement (20) according to one of the preceding claims;
- a hollow-cylindrical motor housing (5);
- an armature unit (7) which is inserted into the cylindrical motor housing (5) and carries one or more wound armatures and a commutator (8) on an output shaft (3) .

7. Electric motor according to Claim 6, wherein a cylindrical brush holder (10) is provided, which cylindrical brush holder is inserted into the motor housing (5) such that it surrounds the commutator (8), and which cylindrical brush holder forms an edge with the inner wall of the motor housing (5), the shielding cap (21) of the shielding arrangement (20) being fitted on the said edge.

8. Electric motor according to either of Claims 6 and 7, wherein the inner part protrudes out of the motor housing (5) such that the termination element (24, 27, 31, 32) can be fitted by being pushed on in a direction perpendicular to the axial direction.

9. Electric motor according to one of Claims 6 to 8, wherein the inner part (22) has an inside diameter in order to push the said inner part over a ball bearing, which is arranged on the output shaft (3), during assembly of the electric motor (2).

10. Electric motor according to Claim 9, wherein the termination element (24, 27, 31, 32) is in the form of a closure plate which is arranged between the shielding cap (21) and the ball bearing.

11. Electric motor according to Claim 9, wherein the termination element (27) is in the form of a metal clamping plate (27) which is arranged in a groove on a circumferential face of the ball bearing.

12. Electric motor according to one of Claims 6 to 11, wherein the termination element (27) has a recess which has at least one semicircular contour in order to at least partially, in particular in a semicircular manner, surround the output shaft (3) which runs through the inner part.

13. Electric motor according to one of Claims 6 to 11, wherein two termination elements (31, 32) with in each case one recess are provided, which two termination elements can be fitted onto the end side of the inner part such that they overlap, wherein a passage opening is formed for the output shaft (3) which runs through the inner part (22).

14. Electric motor according to one of Claims 6 to 11, wherein two termination elements (31, 32) with in each case one complementary contour are provided, which two termination elements interengage when fitted onto the end side of the inner part and form, as a recess, a passage opening for the output shaft (3).

15. Actuator (1), in particular for use in a motor vehicle, comprising:
- a transmission housing comprising a transmission;
- the electric motor (2) according to one of Claims 6 to 14, which is fitted onto the transmission housing (4) so that the output shaft (3) protrudes into the transmission housing (4) in order to couple with a transmission.

## Revendications

1. Arrangement de blindage (20) destiné au blindage d'un collecteur d'un moteur électrique pour un actionneur (1), comprenant :
- un chapeau de blindage (21) en un matériau électriquement conducteur, lequel possède une partie intérieure (22) cylindrique et une portion de maintien (23) ayant un diamètre plus grand par rapport à la partie intérieure (22) ;
**caractérisé par**
- au moins un élément de fermeture (24, 27, 31, 32) plat électriquement conducteur, destiné à être posé sur un côté frontal de la partie intérieure (22) cylindrique,
l'élément de fermeture (24, 27, 31, 32) ne fermant qu'une partie de la face frontale de la partie intérieure (22).

2. Arrangement de blindage (20) selon la revendication 1, le chapeau de blindage 821) possédant un élément de maintien (25) pour maintenir l'élément de fermeture (24, 27, 31, 32) contre le chapeau de blindage.

3. Arrangement de blindage (20) selon la revendication 1 ou 2, la portion de maintien (23) étant disposée à une extrémité de la partie intérieure (22) et réalisée sous la forme d'une collerette circulaire.

4. Arrangement de blindage (20) selon l'une des revendications précédentes, l'élément de fermeture (24, 27, 31, 32) possédant au niveau d'un bord un creux (26), ayant notamment un contour en forme de demi-cercle, à travers lequel un espace intérieur de la partie intérieure (22) est accessible.

5. Arrangement de blindage (20) selon l'une des revendications précédentes, deux éléments de fermeture (31, 32) étant présents, lesquels sont posés sur le chapeau de blindage (21) depuis différentes directions, les deux éléments de fermeture (31, 32) possédant respectivement un creux qui sont disposés au niveau de leurs bords de telle sorte que dans l'état posé sur le chapeau de blindage (21), ils forment une ouverture de passage circulaire sur le côté frontal de la partie intérieure.

6. Moteur électrique (2) pour un actionneur (1) électromotorisé, comprenant :
- un arrangement de blindage (20) selon l'une des revendications précédentes ;
- un carter de moteur (5) cylindrique creux ;
- une unité d'induit (7) introduite dans le carter de moteur (5) cylindrique creux, laquelle porte un ou plusieurs induits enroulés et un collecteur (8) sur un arbre d'entraînement (3).

7. Moteur électrique selon la revendication 6, un porte-balais (10) cylindrique étant présent, lequel est introduit dans le carter de moteur (5) de telle sorte qu'il entoure le collecteur (8) et forme avec la paroi intérieure du carter de moteur (5) une arête sur laquelle est posé le chapeau de blindage (21) de l'arrangement de blindage (20).

8. Moteur électrique selon l'une des revendications 6 et 7, la partie intérieure faisant saillie hors du carter de moteur (5) de telle sorte que l'élément de fermeture (24, 27, 31, 32) peut être posé en le faisant coulisser dans une direction perpendiculaire à la direction de l'axe.

9. Moteur électrique selon l'une des revendications 6 à 8, la partie intérieure (22) possédant un diamètre intérieur afin de pouvoir, lors du montage du moteur électrique (2), la coulisser sur un roulement à billes disposé sur l'arbre d'entraînement (3).

10. Moteur électrique selon la revendication 9, l'élément de fermeture (24, 27, 31, 32) étant réalisé sous la forme d'une tôle de fermeture qui est disposée entre le chapeau de blindage (21) et le roulement à billes.

11. Moteur électrique selon la revendication 9, l'élément de fermeture (27) étant réalisé sous la forme d'une tôle de serrage (27) qui est disposée dans une rainure sur une surface périphérique du roulement à billes.

12. Moteur électrique selon l'une des revendications 6 à 11, l'élément de fermeture (27) possédant un creux qui possède au moins un contour en forme de demi-cercle afin d'entourer au moins partiellement, notamment en forme de demi-cercle, l'arbre d'entraînement (3) qui s'étend à travers la partie intérieure.

13. Moteur électrique selon l'une des revendications 6 à 11, deux éléments de fermeture (31, 32) respectivement pourvus d'un creux étant présents, lesquels peuvent être posés sur le côté frontal de la partie intérieure de telle sorte qu'ils se chevauchent, une ouverture de passage pour l'arbre d'entraînement (3) qui s'étend à travers la partie intérieure (22) étant formée.

14. Moteur électrique selon l'une des revendications 6 à 11, deux éléments de fermeture (31, 32) respectivement pourvus d'un contour complémentaire étant présents, lesquels viennent en prise l'un dans l'autre lors de la pose sur le côté frontal de la partie intérieure, et forment en tant que creux une ouverture de passage pour l'arbre d'entraînement (3).

15. Actionneur (1), notamment destiné à être utilisé dans un véhicule automobile, comprenant :
- un carter d'engrenage doté d'un engrenage ;
- le moteur électrique (2) selon l'une des revendications 6 à 14, lequel est posé sur le carter d'engrenage (4) de sorte que l'arbre d'entraînement (3) fait saillie à l'intérieur du carter d'engrenage (4) afin de s'accoupler avec un engrenage.
